# EUROPÄISCHE PATENTSCHRIFT

(11) **EP 0 920 604 B1**
(45) Veröffentlichungstag und Bekanntmachung des Hinweises auf die Patenterteilung: **02.10.2002**
(21) Anmeldenummer: 97931638.7
(22) Anmeldetag: 21.06.1997
(51) Int. Cl.: G01D 5/14

(54) **MESSVORRICHTUNG ZUR BERÜHRUNGSLOSEN ERFASSUNG EINES DREHWINKELS BZW. EINER LINEAREN BEWEGUNG**
MEASURING DEVICE FOR CONTACTLESS CAPTURE OF THE ANGLE OF ROTATION OR A LINEAR MOTION
DISPOSITIF DE DETECTION SANS CONTACT D'UN ANGLE DE ROTATION OU D'UN MOUVEMENT LINEAIRE

(30) Priorität: 24.08.1996 DE 19634281
(43) Veröffentlichungstag der Anmeldung: 09.06.1999
(73) Patentinhaber: ROBERT BOSCH GMBH, 70442 Stuttgart (DE)
(72) Erfinder: HERDEN, Werner, D-70839 Gerlingen (DE); REICHL, Asta, D-70499 Stuttgart (DE); MARX, Klaus, D-70563 Stuttgart (DE); KLOTZBÜCHER, Thomas, D-73635 Rudersberg (DE); BIELERT, Friedrich, D-37073 Göttingen (DE)
(86) Internationale Anmeldenummer: DE9701295
(87) Internationale Veröffentlichungsnummer: WO98008059

(56) Entgegenhaltungen:
- EP-A- 0 665 416
- US-A- 4 319 236

## Beschreibung

### Stand der Technik

Die Erfindung geht aus von einer Meßvorrichtung zur berührungslosen Erfassung eines Drehwinkels oder einer linearen Bewegung nach der Gattung eines der unabhängigen Ansprüche. Aus der FR-OS 90 15 223 ist eine Meßvorrichtung bekannt, bei der ein Stator und ein Rotor relativ zueinander bewegt werden. Zwischen dem jeweils aus magnetisch leitendem Material bestehenden Stator und dem Rotor befindet sich ein kleiner Luftspalt. Im Rotor ist über eine Länge von 180 Grad ein erster ringförmiger Permanentmagnet angeordnet, der radial polarisiert ist. Im übrigen, ebenfalls 180 Grad aufweisenden Bereich des Stators befindet sich ein zweiter ringförmiger Permanentmagnet mit gegensinniger Polarisation. Ferner weist der Stator zwei diametral gegenüberliegende Luftspalte auf. Wenigstens in einem dieser Luftspalte ist ein Hallsensor angeordnet. Bei der Drehbewegung des Rotors gegenüber dem Stator verändert sich die Stärke des durch den Hallsensor verlaufenden Magnetfelds. Der lineare Meßbereich des so erzeugten Meßsignals ist aber auf eine Größe von ca. ± 75 Grad begrenzt. Ferner weist dieser lineare Meßbereich einen Vorzeichenwechsel auf. Gegebenenfalls könnte dieser aufwendig in einer anschließenden elektrischen Schaltung korrigiert werden.

Ferner ist es bekannt, zur Messung von linearen Bewegungen Permanentmagnete relativ gegenüber einem magnetfeldempfindlichen Element zu verschieben. Hierbei ist es auch bekannt, den Fluß des Permanentmagneten mit Hilfe von magnetisch leitenden Teilen zu führen.

In der EP-A-0 665 416 ist eine Messvorrichtung beschrieben, die einen Stator und einen hierzu relativ bewegten Rotor aufweist. Im Luftspalt zwischen dem Stator und dem Rotor befindet sich ein Permanentmagnet. Die durch die Drehbewegung des Rotors hervorgerufene Veränderung des magnetischen Feldes des Permanentmagneten wird mit Hilfe eines Hallelements erfasst. Anregungen um einen vorzeichenwechselfreien Messbereichsverlauf zu erhalten sind nicht vorhanden.

### Vorteile der Erfindung

Die erfindungsgemäße Meßvorrichtung zur berührungslosen Erfassung eines Drehwinkels bzw. einer linearen Bewegung mit den kennzeichnenden Merkmalen der unabhängigen Ansprüche hat demgegenüber den Vorteil, daß ein linearer Meßbereich ohne Vorzeichenwechsel der Meßspannung möglich ist. Der lineare Meßbereich ist dabei größer als 90 Grad, insbesondere vor allem größer als 110 Grad. Der vorzeichenwechselfreie lineare Meßbereich ist in beiden Drehrichtungen der Meßvorrichtung, also bei positiver oder negativer Drehrichtung, möglich. Je nach Ausführung des magnetfeldempfindlichen Elements ist über den linearen Meßbereich eine positive oder negative Ausgangsspannung möglich.

Durch einfache konstruktive Bauweise ist es möglich, eine unsymmetrische Führung der Feldlinien zu erzeugen und somit den linearen Meßbereich vorzeichenwechselfrei zu gestalten. Dadurch wird der Meßbereich erhöht. Der eigentliche Meßwinkel kann individuell durch die Größe der Segmente bestimmt werden.

Durch die in den Unteransprüchen aufgeführten Maßnahmen sind vorteilhafte Weiterbildungen und Verbesserungen der in den unabhängigen Ansprüchen angegebenen Meßvorrichtung möglich.

### Zeichnungen.

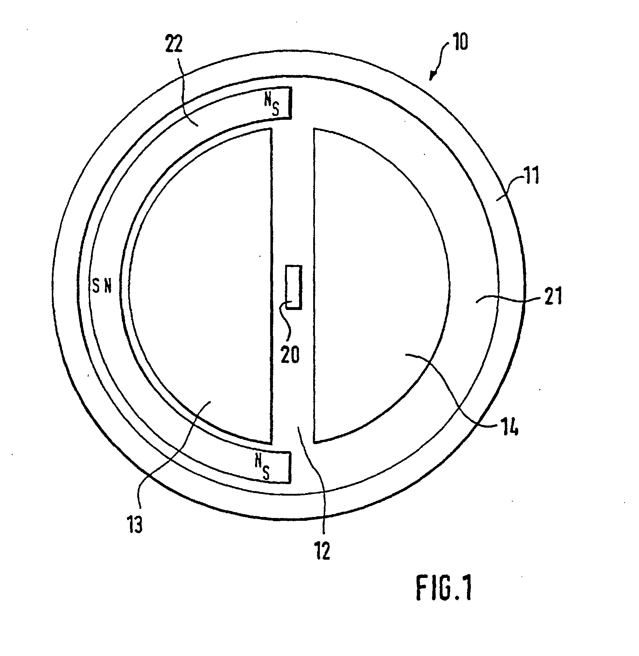

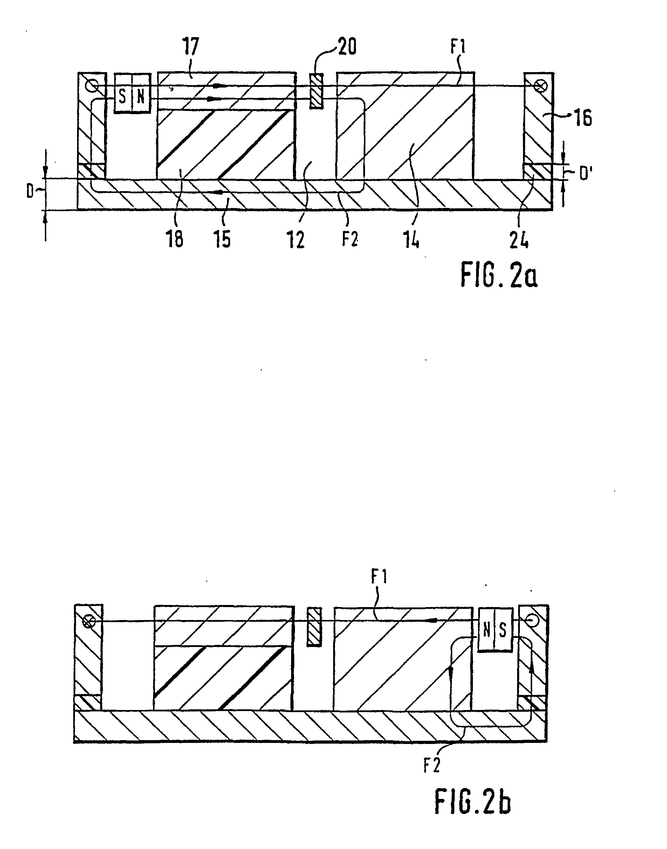

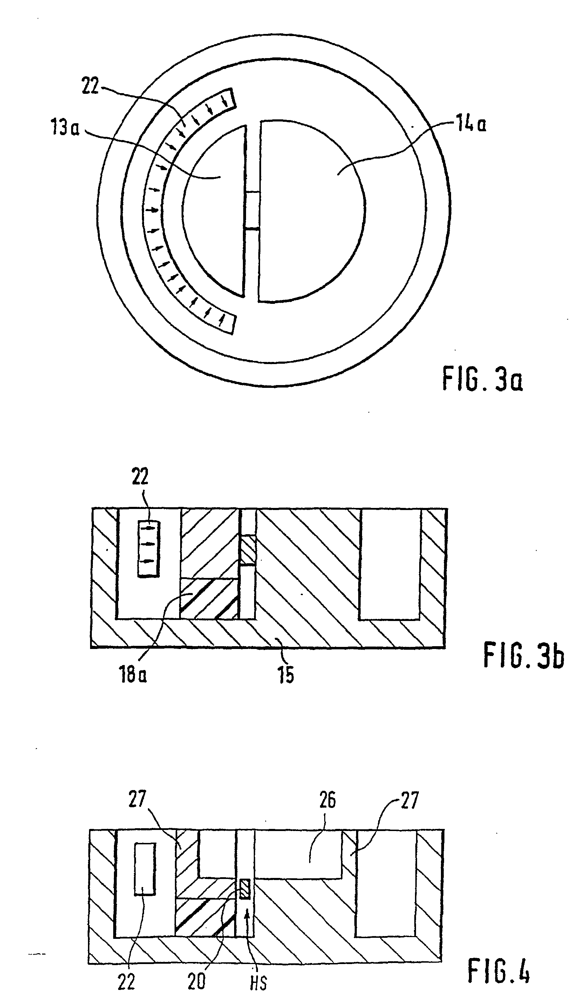

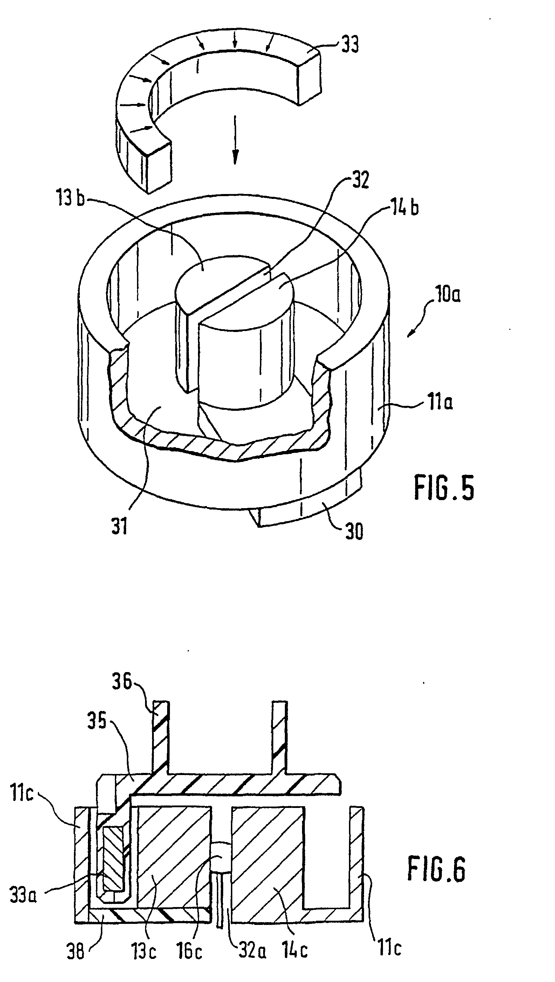

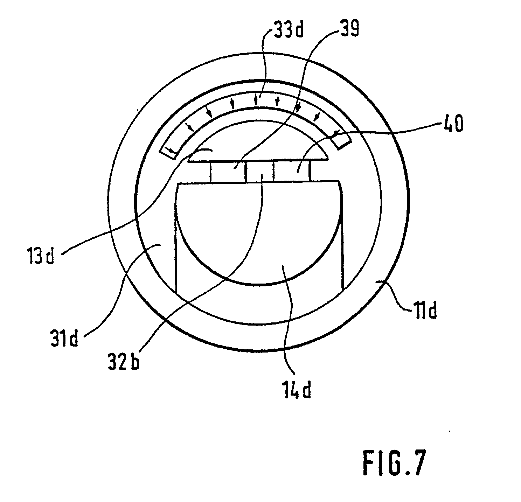

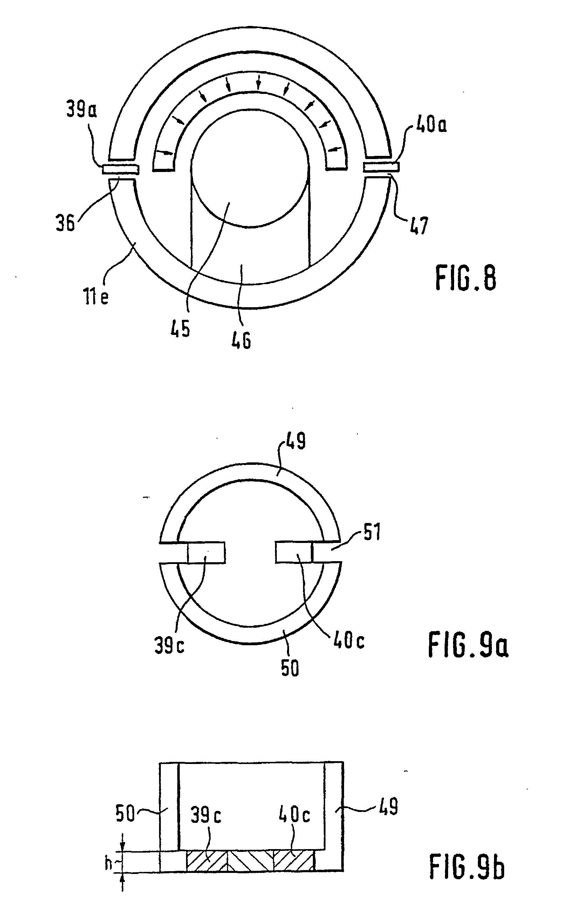

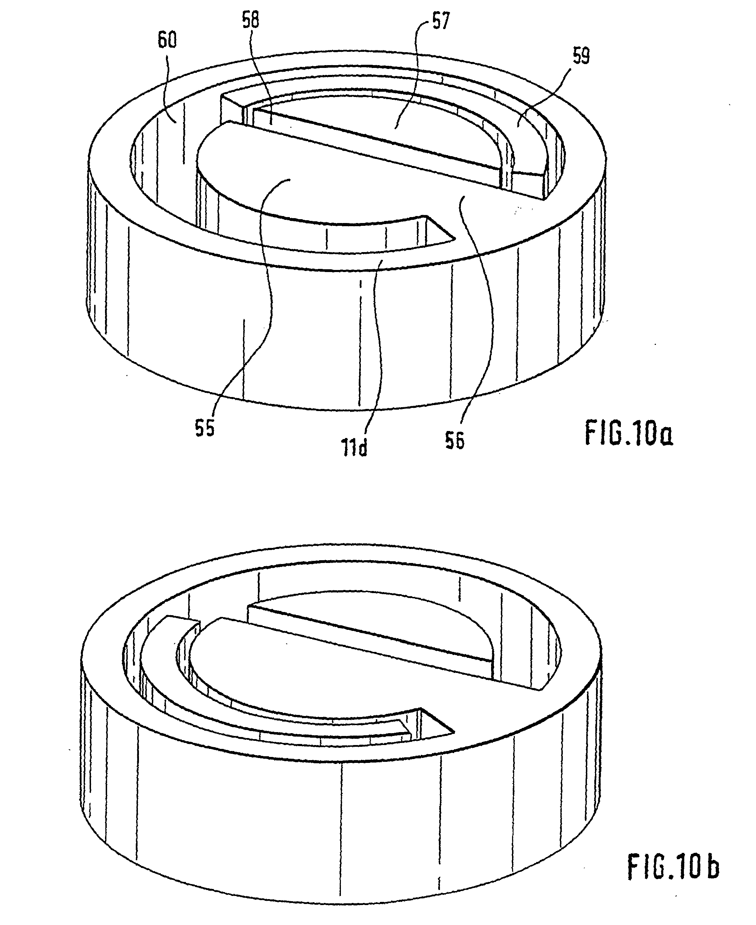

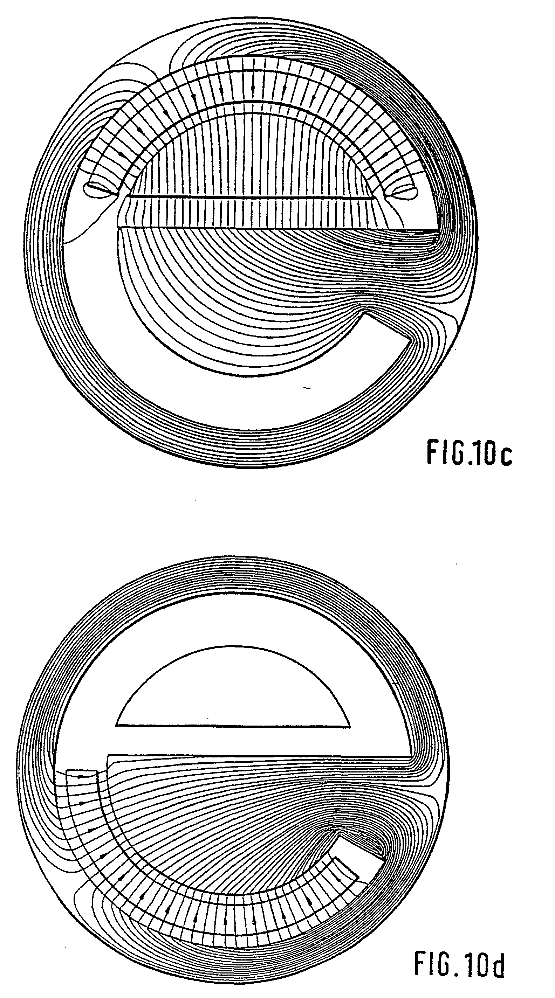

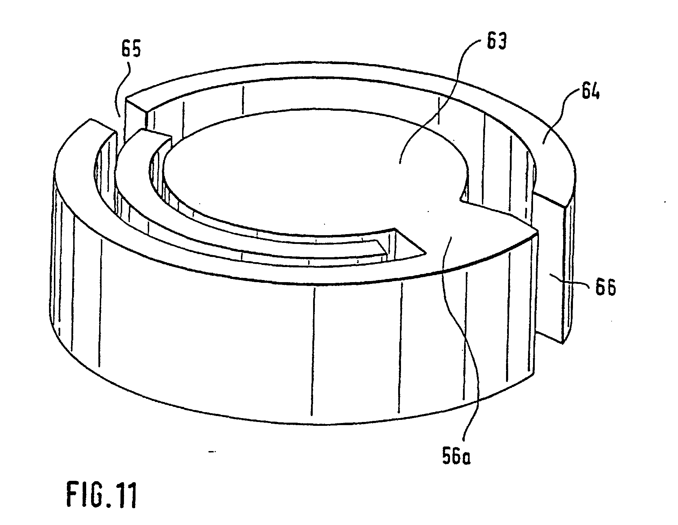

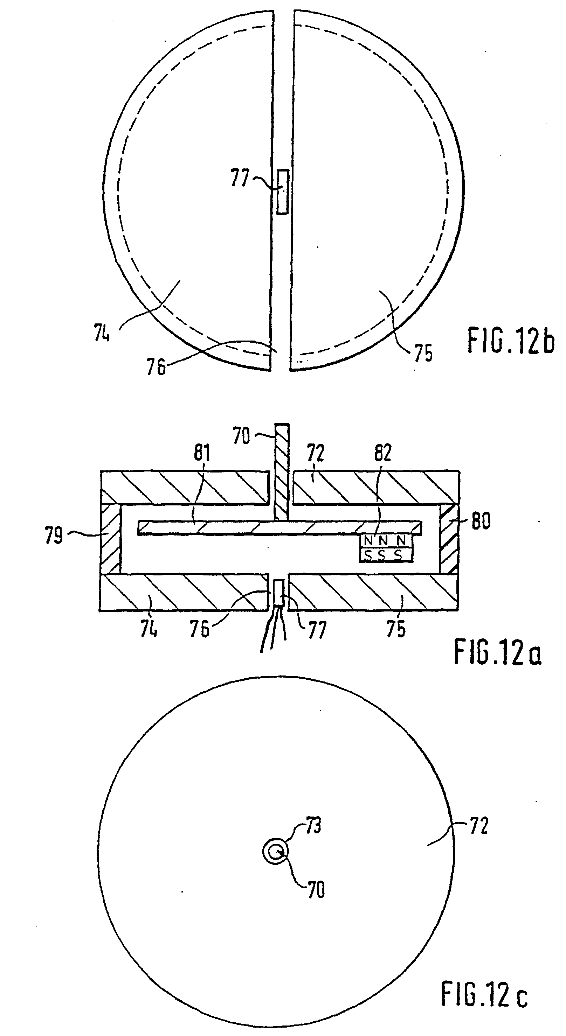

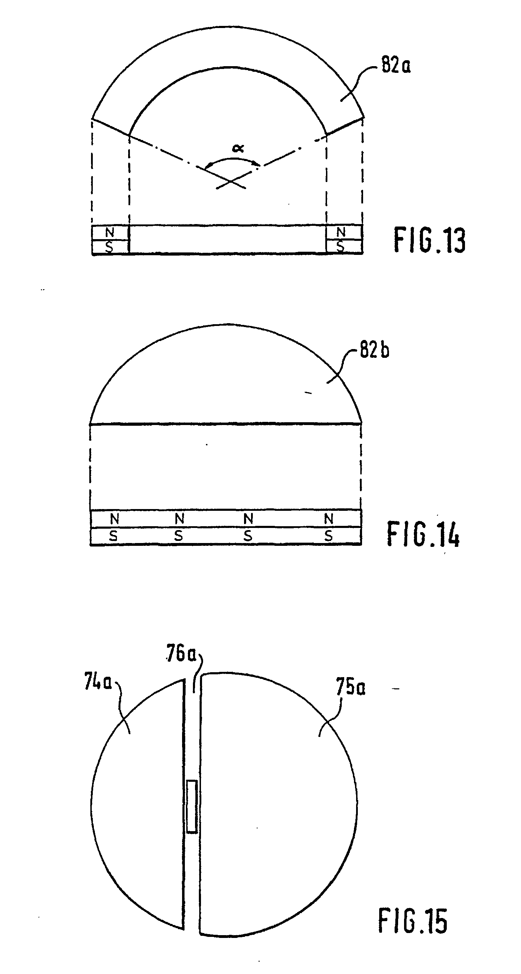

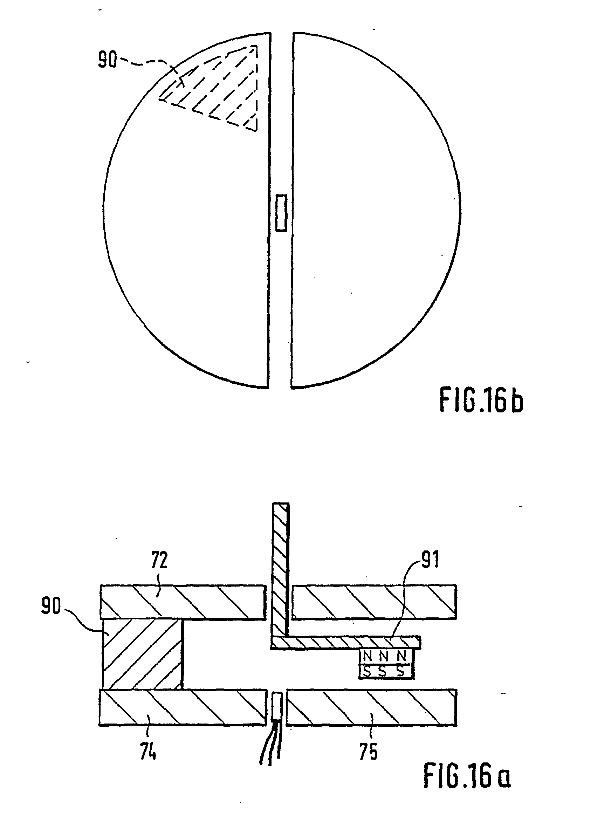

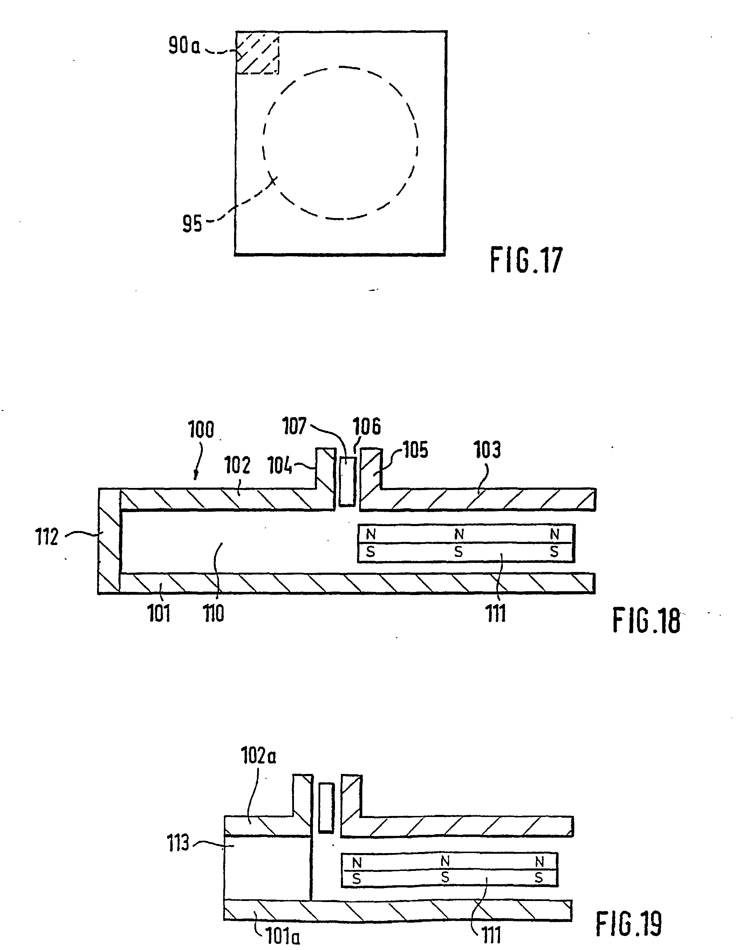

Ausführungsbeispiele der Erfindung sind in der Zeichnung dargestellt und in der nachfolgenden Beschreibung näher erläutert. Figur 1 zeigt eine Draufsicht auf ein erstes Auführungsbeispiel, Figur 2a einen Längsschnitt durch das Ausführungsbeispiel nach Figur 1 bei einer Winkelstellung des Magneten und des dazugehörigen Magnetlinienverlaufs mit einem maximalen Ausgangssignal im Hallelement, während Figur 2b die Winkelstellung des Magneten und den dazugehörigen Magnetlinienverlauf mit minimalem Ausgangssignal im Hallelement darstellt. Figur 3a zeigt eine Draufsicht und Figur 3b einen Längsschnitt durch ein zweites Ausführungsbeispiel. Die Figur 4 zeigt einen Längsschnitt durch eine Abwandlung des zweiten Ausführungsbeispiels und die Figur 5 eine perspektivische Darstellung eines weiteren Ausführungsbeispiels. Die Figuren 6, 7, 8 zeigen jeweils eine Abwandlung nach Figur 5. Die Figuren 9a, 9b zeigen eine Abwandlung der Form des Stators zur Erhöhung der magnetischen Induktion im Bereich der Hallelemente In Figur 10 ist eine Abwandlung mit einer magnetisch leitenden Brücke im Stator gezeigt, wobei Figur 10a die Stellung des Rotors bei maximalem Magnetfluß durch das Hallelement und Figur 10c den dazugehörigen Magnetfluß, Figur 10b die Stellung des Rotors bei minimalem Magnetfluß durch das Hallelement und Figur 10d den dazugehörigen Magnetfluß darstellen. Figur 11 ist eine Abwandlung nach Figur 10. Ab der Figur 12 ist ein Winkelsensor als scheibenförmige Ausgestaltung dargestellt. Die Figur 12a zeigt einen Längsschnitt, die Figur 12b eine Bodenansicht und die Figur 12c eine Draufsicht auf ein Ausführungsbeispiel. Die Figuren 13 und 14 zeigen Abwandlungen eines Details und Figur 15 eine unsymmetrische Ausbildung der Segmente. Die Figuren 16a und 16b sind Abwandlungen für ein beliebig geformtes Leitstück als Längsschnitt und als Bodenansicht, die Figur 17 ist eine weitere Abwandlung nach den Figuren 13 bis 16. In der Figur 18 ist ein Längsschnitt durch einen Sensor zur Bestimmung von Linearbewegungen und in Figur 19 eine Abwandlung des Ausführungsbeispiels nach der Figur 18 dargestellt.

### Beschreibung der Ausführungsbeispiele

In der Figur 1 ist mit 10 ein Stator bezeichnet, der aus einem becherförmigen Gehäuseteil 11 besteht. In das Gehäuseteil 11 sind zwei durch einen Schlitz 12 getrennte Segmente 13, 14 eingesetzt. Beide Segmente 13, 14 liegen auf dem Boden 15 (Fig. 2a) des Gehäuseteils 11 auf. Sowohl die Seitenwand 16 als auch der Boden 15 des Gehäuseteils 11 des Stators 10 besteht aus magnetisch leitendem, insbesondere weichmagnetischem Material. Auch das Segment 14 besteht aus magnetisch leitendem, insbesondere weichmagnetischem Material. Das zweite Segment 13 weist hingegen eine magnetisch leitende, aus weichmagnetischem Material bestehende obere Schicht 17 und eine Schicht 18 aus nicht magnetisch leitendem Material, zum Beispiel Kunststoff auf. Mit der Schicht 18 ist es auf dem Boden 15 des Gehäuseteils 11 des Stators 10 aufgesetzt, zum Beispiel verklebt. In den Spalt 12 zwischen den beiden Segmenten 13, 14 ist ein magnetfeldempfindliches Element 20, wie zum Beispiel Feldplatte, Magnettransistor, magnetoresistives Element oder ein Hallelement eingesetzt. Wichtig hierbei ist, daß das magnetfeldempfindliche Bauteil eine möglichst lineare Abhängigkeit seines Ausgangssignals von der magnetischen Induktion B aufweist. In dem Spalt 21 zwischen dem Gehäuseteil 11 und den beiden Segmenten 13, 14 ist ein Rotor 22 angeordnet, der mit einer nicht dargestellten Verbindung mit dem Bauteil, dessen Drehwinkel bestimmt werden soll, verbunden ist. Der Rotor 22 besteht aus einem Magneten, insbesondere einem Ringmagneten, dessen magnetische Polarisierungsrichtung zu den Segmenten 13, 14 hin gerichtet ist. So weist zum Beispiel der Nordpol des Ringmagneten 22 zu den Segmenten 13, 14 hin. Selbstverständlich ist zwischen den Segmenten 13, 14 und dem Ringmagneten 22 bzw. zwischen dem Ringmagneten und dem Rand 16 des Gehäuseteils 11 ein geringer Luftspalt, um die Beweglichkeit des als Rotor dienenden Ringmagneten 22 zu ermöglichen. Die Tiefe des Ringmagneten 22 entspricht dabei etwa der Tiefe der magnetisch leitenden Schicht 17 des Segments 13. Zwischen der Seitenwand 16 und dem Boden 15 des Gehäuseteils 11 ist eine Schicht 24 aus magnetisch nicht leitendem Material vorhanden.

Aufgrund der konstruktiven Ausgestaltung des Stators 10 und der Zuordnung des Rotors 22 ist es möglich, die Magnetlinien des als Rotor dienenden Ringmagneten 22 aufzuspalten und somit eine Verschiebung des linearen Bereichs der Signalkurve zu erreichen. Mit der Verschiebung der Signalkurve soll erreicht werden, daß im gesamten linearen Meßbereich kein Vorzeichenwechsel erfolgt. In der Figur 2a ist nun die Winkelposition des Rotors 22 gegenüber dem Stator 10 dargestellt, die im Hallelement 20 ein maximales Ausgangssignal erzeugt. Hierbei passieren die aus dem Magneten 22, d.h. aus seinem Nordpol austretenden Feldlinien den Luftspalt 21 und durchströmen die Schicht 17 des Segments 13. Nachdem die Feldlinien das Hallelement 20 und den Schlitz 12 passiert haben, teilt sich der magnetische Fluß in die Teilflüsse F1 und F2 auf. Der magnetische Teilfluß F2 biegt im Segment 14 ab und wird über den Boden 15, die Schicht 24 und die Seitenwand 16, den Luftspalt 21 zum Permanentmagneten 22, d.h. dessen Südpol zurückgeführt. Hingegen verlaufen die Feldlinien des magnetischen Teilflusses F2 in einer Ebene parallel zum Boden 15 des Gehäuseteils 11 und durchfließen somit das Segment 14, passieren den Luftspalt 21 und gelangen über die Seitenwand 16 und den Luftspalt 21 zurück zum Südpol des Permanentmagneten 22. Während der Drehung des Rotors 22 relativ zum Stator 10 wird aufgrund der Magnetflußänderung im Hallelement 20 ein linear verlaufendes Meßsignal erzeugt. Nach einer Drehung um 180 Grad ergibt sich bei der in der Figur 2b dargestellten Position der minimale Magnetfluß durch das Hallelement 20 und somit das minimale Ausgangssignal. Wie aus der Figur 2b erkenntlich, entspricht der Verlauf des magnetischen Teilflusses F1 dem in der Figur 2a, wobei die Richtung entgegengesetzt verläuft. Der magnetische Teilfluß F2 durchströmt nicht mehr das Hallelement 20. Vielmehr wird der Teilfluß F2 bei Austritt aus dem Permanentmagneten 22 und der Passierung des Luftspaltes 21 im Segment 14 axial abgelenkt und der magnetische Teilfluß F2 verläuft über den Boden 15, die nicht magnetische Schicht 24 und die Seitenwand 16 und den Luftspalt 21 zurück zum Südpol des Permanentmagneten 22. Aus dieser Unsymmetrie des gesamten magnetischen Flusses des Permanentmagneten 22, d.h. aufgrund der Aufteilung des magnetischen Flusses des Permanentmagneten 22 in die magnetischen Teilflüsse F1 und F2 ergibt sich eine vertikale Verschiebung der Kennlinie des Meßsignals des Winkelsensors. Der Grad, d.h. die Größe der vertikalen Verschiebung ergibt sich aus dem Verhältnis der Teilflüsse F1 und F2. Die Größe des Teilflusses F2 läßt sich über die Dicke des Bodens 15 und/oder über die Dicke des nichtmagnetischen Spalts 24 zwischen dem Boden 15 und der Seitenwand 16 steuern. Eine maximale vertikale Verschiebung der Kennlinie ergibt sich, wenn der nichtmagnetische Spalt 24 entfällt. In allen zwischen den in der Figur 2a bzw. in der Figur 2b dargestellten Extrempositionen teilen sich die magnetischen Flüsse so, daß sich eine möglichst große lineare Kennlinie des Winkelsensors ergibt.

Beim Ausführungsbeispiel nach den Figuren 1 und 2 sind die beiden Segmente 13, 14 gleich groß ausgebildet, so daß der Schlitz 12 mittig zwischen den beiden Segmenten 13, 14 hindurch verläuft. Im Unterschied dazu sind bei dem in der Figur 3a bzw. 3b dargestellten Ausführungsbeispiel des Winkelsensors die Segmente 13a und 14a unsymmetrisch ausgebildet. In den Figuren 3a und 3b ist das größere (14a) der beiden Segmente magnetisch wieder über die Bodenplatte 15 mit dem Gehäuseteil 11 verbunden. Das kleinere Segment 13a ist aufgrund eines nicht magnetisch leitenden Teils 18a magnetisch von der Bodenplatte 15 getrennt. Während bei dem Ausführungsbeispiel nach der Figur 1 ein Öffnungswinkel und somit ein Winkel des Rotors 22 von 180 Grad vorgesehen ist, ist im Ausführungsbeispiel nach der Figur 3 ein kleinerer Öffnungswinkel möglich. Zu beachten ist, daß die Größe des als Rotor dienenden Permanentmagneten 22 auf die Größe des Segments 13a mit dem nichtmagnetischen Teil 18a abgestimmt sein muß.

Durch die konstruktive Ausgestaltung, d.h. durch die Abwandlung gegenüber dem Ausführungsbeispiel nach der Figur 3, kann beim Ausführungsbeispiel nach der Figur 4 eine Erhöhung der magnetischen Induktion B am Ort des Hallelements 20 erreicht werden. Hierzu ist in beiden Segmenten 13a, 14a von oben her eine Bohrung bzw. eine Ausnehmung 26 eingebracht. Durch die nun dünnen Wände 27 der beiden Segmente 13a, 14a wird ein konzentrierter Magnetfluß durch das Hallelement 20 erreicht. Durch diese spezielle konstruktive Abänderung gegenüber dem Ausführungsbeispiel nach der Figur 3 konzentrieren sich die magnetischen Feldlinien des als Rotor dienenden Permanentmagneten 22 am Ort des Hallelements 20.

In der Figur 5 ist ein weiteres Ausführungsbeispiel dargestellt. Während beim Ausführungsbeispiel nach den Figuren 1 bis 4 die beiden Segmente 13, 14 auf dem Boden 15 eines topfförmig ausgebildeten Gehäuseteils 11 aufsaßen, weist der Stator 10a in der Figur 5 ein ringförmiges bzw. relativ kurzes, rohrförmig ausgebildetes Gehäuseteil 11a auf. Die beiden Segmente 13b und 14b sind wieder als Teil des Stators 10a aus weichmagnetischem Material gefertigt. Beide Segmente 13b und 14b sind bezogen auf die Größe symmetrisch ausgebildet. Das Segment 14b besteht völlig aus magnetisch leitendem, zum Beispiel aus weichmagnetischem Material und weist einen Fortsatz 30 auf, der bis zur oder unter die Stirnseite des Gehäuseteils 11a ragt. Wichtig ist dabei, daß das Teil 30 eine magnetisch leitende Verbindung zwischen dem Segment 14b und dem Gehäuseteil 11a herstellt. Die Breite und die Form des Teils 30 kann hier stark variieren. So kann es zum Beispiel die Form eines Streifens, wie es in der Figur 5 dargestellt ist, aufweisen, oder auch als 180-Grad-Halbkreissegment ausgeführt sein. Das andere Segment 13b ist somit aufgrund des Luftspalts 32 zwischen den beiden Segmenten 13b und 14b und des Luftspalts 31 zwischen dem Gehäuseteil 11a magnetisch entkoppelt, d.h. es liegt keine geschlossene magnetisch leitende Verbindung vor. In dem zwischen den beiden Segmenten 13b und 14b ausgebildeten Spalt 32 ist, in der Figur 5 nicht dargestellt, aber wie in allen bisherigen Ausführungsbeispielen auch, ein magnetfeldempfindlicher Sensor, insbesondere ein Hallsensor, angeordnet. In den Luftspalt 31 ist als Stator ein in radialer Richtung magnetisierter Dauermagnet 33 angeordnet. Der Dauermagnet 33 ist hierbei mit einem nicht dargestellten Bauteil verbunden, dessen Drehwinkel bestimmt werden soll. Der Dauermagnet 33 rotiert im Luftspalt 31 konzentrisch, wobei er weder mit den Segmenten 13b und 14b noch mit der Innenwand des Gehäuseteils 11a in Berührung gerät. Die Magnetisierungsrichtung des Dauermagneten 33 ist in der Figur 5 durch Pfeile angedeutet und zeigt in Richtung zu den Segmenten 13b bzw. 14b. Es ist aber auch eine entgegengesetzte Magnetisierungsrichtung möglich.

In der Figur 6 ist eine Abwandlung des Ausführungsbeispiels nach der Figur 5 dargestellt, wobei insbesondere die Anschlußmöglichkeit des als Rotor dienenden Dauermagneten an das zu bestimmende Bauteil dargestellt ist. Der Ringmagnet 33a ist hierbei von einem Verbindungselement 35 zum Beispiel aus Kunststoff umfaßt. Das Verbindungselement 35 weist einen flanschartigen Fortsatz 36 auf, mit dem es zum Beispiel eine Welle umgreift, deren Drehbewegung bestimmt werden soll. Wie in der Figur 5 ist das Segment 14c mit Hilfe eines Teils mit dem Bauteil 11c verbunden. Alle drei Elemente sind in der Figur 6 aber aus einem Stück hergestellt, so daß sich für das Segment 14c im Querschnitt eine U-förmige Form ergibt, wobei jeder der Schenkel eine unterschiedliche Dicke aufweist. Dieses einstückige Bauteil kann aus gestapeltem Transformatorblech oder aus Sintermaterial hergestellt werden. Das andere Segment 13c ist mit Hilfe eines Fortsatzes 38 aus magnetisch nicht leitendem Material, zum Beispiel einer Platte aus Kunststoff, am Gehäuseteil 11c befestigt, zum Beispiel verklebt. Im Spalt 32a zwischen den beiden Segmenten 13c und 14c ist das Hallelement 16c angeordnet.

Selbstverständlich ist das Arbeitsprinzip dieses Winkelsensors, wie er in den Figuren 5 und 6 dargestellt ist, nicht auf eine symmetrische Ausführung der beiden Segmente 13b, 14b bzw. 13c, 14c beschränkt. Auch können Ringmagnete mit einem von dem in der Figur 5 dargestellten Öffnungswinkel α von 180 Grad abweichend verwendet werden. In der Abwandlung des Ausführungsbeispiels nach der Figur 7 sind nun zwei unterschiedlich große Segmente 13d und 14d dargestellt. Der Schlitz 32b zwischen den beiden Segmenten 13d und 14d verläuft somit nicht mehr durch die Achse des Gehäuseteils 11d. In der Figur 7 ist nun das größere Segment 14d über ein, in der Figur 7 nicht dargestelltes aber entsprechend den Figuren 5 bzw. 6 aus weichmagnetischem Material bestehendes Blech mit dem Gehäuseteil 11d verbunden. Das kleinere Segment 13d hingegen ist wieder nichtmagnetisch, d.h. so daß kein geschlossener magnetischer Fluß möglich ist, mit dem Gehäuse 11d, zum Beispiel mit einer Platte aus nichtmagnetischem Material, verbunden. Der sich im Ringspalt 31d befindende Dauermagnet 33d hat einen dem kleineren Segment 13d entsprechenden öffnungswinkel. In der Figur 7 entspricht dieser Öffnungswinkel α etwa 140 Grad. Als weitere Abwandlung sind im Spalt 32b zwei Hallsensoren 39, 40 angeordnet. Selbstverständlich können auch zwei Hallelemente im Ausführungsbeispiel nach der Figur 5 bzw. 6 im Spalt 32 bzw. 32a angeordnet sein.

Das Ausführungsbeispiel nach der Figur B hat statt der beiden Segmente 13, 14 einen stabförmigen Kern 45 als Rotor. Im Gehäuseteil 11e sind zwei Schlitze 36, 47 ausgebildet, in denen je ein Hallelement 39a, 40a angeordnet ist. Diese Ausbildung ermöglicht eine einfache Herstellung des Kerns 45 aus Vollmaterial. Ein Schlitz oder eine zentrische Bohrung im Kern 45 wäre aber ohne Einfluß auf die Funktion des Sensors. Der gesamte Kern 45 ist mit Hilfe eines Fortsatzes 46 aus magnetisch leitendem, insbesondere weichmagnetischem Material, mit dem Gehäuseteil 11e verbunden.

Werden die beiden Hallelemente 39, 40, wie in der Figur 7 oder in der Figur 5, in dem Schlitz zwischen den beiden Segmenten 13, 14 angeordnet, so kann durch eine spezielle Formgebung der beiden Segmente 13, 14 die maximale Höhe der magnetischen Induktion am Ort der Hallelemente verbessert werden. Diese spezielle Formgebung kann sowohl bei der symmetrischen Ausbildung nach der Figur 5, als auch bei der unsymmetrischen Ausbildung nach der Figur 7 angewendet werden. Die beiden Segmente haben hierbei die Form eines durch den Schlitz 51 geteilten Bechers mit den Becherteilen 49, 50. Die Hallelemente 39c und 40c sind hierbei in den Boden der beiden Becherteile 49, 50 eingelassen, wie aus der Figur 9b ersichtlich ist. Die oben erwähnte Steigerung der maximalen Höhe der magnetischen Induktion erhält man dann, wenn bei unveränderter Außenfläche der beiden Becherteile 49, 50 die Spaltfläche 51 zwischen ihnen verringert wird, d.h. die Spalthöhe h möglichst gering ist. Hierbei werden die magnetischen Feldlinien im Boden der beiden Becherteile 49, 50 konzentriert, so daß die magnetische Induktion B am Ort der Hallelemente 39c, 40c ansteigt.

In den Figuren 10a bis 10d ist eine Abwandlung des Winkelsensors dargestellt. Bisher war eines der Segmente mit Hilfe eines Fortsatzes mit dem Boden, d.h. der Stirnseite des äußeren Gehäuseteils des Stators verbunden. Im Unterschied dazu ist nun eines der Segmente 55 mit Hilfe einer Brücke 56 mit dem äußeren Gehäuseteil 11d verbunden. Das zweite Segmentelement 57 weist wieder keine Verbindung mit dem Gehäuseteil 11d auf, d.h. es besteht zwischen dem Segment 57 und dem Gehäuseteil 11d keine magnetisch leitende Verbindung. Aufgrund der Brücke 56 ist somit der zu bestimmende Winkelbereich begrenzt, d.h. es sind keine Messungen über einen Winkel von ca. 200 Grad möglich. Vorteilhafterweise können aber bei dieser Ausbildung das Segment 55, die Brücke 56 und das Gehäuseteil 11d als einteiliges Bauteil aus weichmagnetischem Material, zum Beispiel gestapelte Transformatorbleche oder Sintermaterial, gefertigt werden. Selbstverständlich ist es hier auch wiederum möglich, die beiden Segmente 55, 57 nicht symmetrisch sondern, wie zum Beispiel in der Figur 5, auch unsymmetrisch auszubilden. Wiederum ist in dem Schlitz 58 zwischen den beiden Segmenten 56, 57, in der Figur 10a nicht sichtbar, das Hallelement angeordnet. Bei der Darstellung nach der Figur 10a umfaßt der im Schlitz 60 angeordnete Permanentmagnet 59 das Segment 57, d.h. der Permanentmagnet 59 und das Segment 57 weisen einen gemeinsamen Winkelbereich von ca. 180 Grad auf. Bei dieser Anordnung erhält man einen Magnetfluß, der in der Figur 10c dargestellt ist. Es ist aus der Figur 10c erkennbar, daß aufgrund der Polarisierungsrichtung, d.h. der radialen Ausrichtung der Pole des Permanentmagneten 59, der Magnetfluß vom Permanentmagneten 59 über den Luftspalt 60 in das Segment 57 über den Luftspalt 58 und dem dort angeordneten Hallelement in das Segment 55 erfolgt. Vom Segment 55 verlaufen die magnetischen Feldlinien über die Brücke 56 und verteilen sich im Gehäuseteil 11d. Im Gehäuseteil 11d fließen die Feldlinien sowohl in als auch gegen den Uhrzeigersinn zurück über den Spalt 60 in den Permanentmagneten 59. Aufgrund der Stellung in der Figur 10a bzw. dem in der Figur 10c dargestellten Magnetfluß ist die magnetische Induktion im Spalt 58, d.h. im Hallelement maximal. Aus der Darstellung in der Figur 10c ist erkennbar, daß nahezu alle Magnetlinien, die aus dem Permanentmagneten 59 austreten, den Spalt 58 zwischen den Segmenten 57 und 55 durchsetzen und somit das Hallelement beeinflussen.

In der Figur 10b ist nun die Stellung des Rotors, d.h. des Permanentmagneten 59 innerhalb des Stators bei einer minimalen Induktion im Hallelement dargestellt. In der Figur 10b ist nun der Permanentmagnet 59 so weit gedreht, daß er nur noch das Segment 55 umgreift, wobei er selbstverständlich nicht an der Brücke 56 anliegt. Der dazugehörige Magnetfluß für diese Position ist in der Figur 10d dargestellt. Es ist erkennbar, daß der Magnetfluß vom Permanentmagneten 59 über den Spalt 60 in das Segment 55 verläuft und dort über die Brücke 56 in das Gehäuseteil 11d verläuft. Dort teilt sich der Magnetfluß wieder auf und verläuft in bzw. gegen den Uhrzeigersinn im Bauteill 11d, bis er im Bereich des Permanentmagneten 59 durch den Luftspalt 60 in den Permanentmagneten 59 zurückgelangt. Insbesondere aus der Figur 10d ist erkennbar, daß der Magnetfluß den Spalt 58 nicht durchströmt und somit kein Signal im Hallelement erzeugt wird.

Selbstverständlich ist es auch, wie in der Figur 11 dargestellt, wiederum möglich, statt der beiden Segmente 55, 57 einen Vollkörper 63 zu verwenden, der mit Hilfe der Brücke 56a mit dem Gehäuseteil 64 verbunden ist. Das Gehäuseteil 64 weist dabei wieder zwei diametral gegenüberliegende Schlitze 65, 66 auf, in denen jeweils ein Hallelement, in der Figur 11 nicht dargestellt, angeordnet ist.

Bei allen bisher dargestellten Ausführungsbeispielen der Figur 1 bis Figur 11 kann der Permanentmagnet neben den bekannten Magnetwerkstoffen auch aus kunststoffgebundenen Seltene-Erden-Magneten (z.B. Sm₂Co₁₇) hergestellt werden.

In den nun folgenden Ausführungsbeispielen wird ein Winkelsensor gezeigt, bei dem der Stator und der Rotor als Scheiben nebeneinander bzw. übereinander ausgebildet sind. Hierbei weist in der Figur 12a der Rotor eine Achse 70 auf, mit der er in den Figuren 12a bis c nicht dargestellt mit einem Bauteil verbindbar ist. Die Achse 70 ragt, wie aus der Figur 12c erkennbar, durch eine in der Deckenplatte 72 ausgebildete Bohrung 73. Die Bodenplatte besteht, wie aus der Figur 12b erkennbar ist, aus einem Kreissegment 74 und einem Kreissegment 75, das von einem Spalt 76 getrennt ist. Im Spalt 76 ist mittig ein Hallelement 77 angeordnet. Die Bodenplatte 72 und die beiden Segmente 74, 75 sind mit Hilfe zweier Distanzstücke 79, 80 voneinander getrennt. Am Ende der durch die Bohrung 73 ragenden Achse 70 ist eine Tägerplatte 81 befestigt, auf der sich ein Permanentmagnet 82 befindet. Die Trägerplatte 81 mit dem Permanentmagneten B2 dient als Rotor, während die Deckenplatte 72 und die beiden Segmente 74, 75 und die beiden Distanzstücke 79, 80 als Stator dienen. Die Deckenplatte 72 und die beiden Segmente 74, 75 und mindestens eines der Distanzstücke 79 bestehen aus magnetisch leitendem Material, insbesondere weichmagnetischem Material. Das zweite Distanzstück 80 ist aus nichtmagnetischem Material, zum Beispiel Kunststoff, gefertigt. Es ist nicht zwangsläufig notwendig, daß bei dieser scheibenförmigen Ausgestaltung des Winkelsensors die äußere Kontur kreisförmig ist. Wie bei den früher beschriebenen Ausführungsbeispielen ist es auch hier möglich, statt einem Hallelement wiederum mehrere magnetfeldempfindliche Elemente im Spalt 76 zwischen den Segmenten 74, 75 anzuordnen. Die Form, d.h. der Winkelbereich des Pemanentmagneten 82 ist wiederum von der Größe des zu messenden Winkels abhängig. So ist in der Figur 13 ein Permanentmagnet 82a für einen Winkelbereich von ca. 140 Grad dargestellt. In der Figur 14 hingegen ist der Permanentmagnet 82b als Halbkreis ausgebildet und hat somit einen Meßwinkel von 180 Grad. Aus allen drei Figuren 12a bzw. 13 bzw. 14 ist erkennbar, daß die Polarisierungsrichtung des Permanentmagneten 82 in Achsrichtung der Achse 70 ist. Ferner ist es wie bei den bisherigen Ausführungsbeispielen auch hier möglich, die Segmente 74 bzw. 75 symmetrisch, wie in der Figur 12 dargestellt, oder auch unsymmetrisch, wie in der Figur 15 gezeigt, auszubilden. In der Figur 15 ist erkennbar, daß bei der unsymmetrischen Ausgestaltung der Schlitz 76a außerhalb des Mittelpunkts der Achse 70 verläuft und somit ein kleineres (74a) und ein größeres (75a) Segment vorhanden ist. Während es bei der Ausführung nach Figur 12a aufgrund der symmetrischen Ausbildung der Segmente 74, 75 beliebig möglich ist das aus nichtmagnetischem Material betehende Distanzteil 80 wahlweise dem einen als auch dem anderen Segment zuzuordnen, ist bei der unsymmetrischen Ausführung des Winkelsensors nach der Figur 15 das größere Segment 75a mit Hilfe des weichmagnetischen Distanzstückes 79 mit dem Deckelteil 72 verbunden. Aufgrund der konstruktiven Ausgestaltung ist es auch bei scheibenförmig ausgebildeten Winkelsensoren möglich, die magnetischen Feldlinien des verwendeten Magneten 82 so zu führen, daß eine Anhebung des linearen Meßbereichs bewirkt wird, so daß kein Vorzeichenwechsel innerhalb des linearen Meßbereichs erfolgt. Der Winkelbereich, innerhalb dem ein linear verlaufendes Meßsignal erzeugt wird, kann dabei auch ≥ 110 Grad betragen.

Während beim Ausführungsbeispiel nach der Figur 12 eine Trennung des magnetischen Flusses mit Hilfe des aus nichtmagnetischem Material bestehenden Distanzstücks 80 bewirkt wird und der Fluß der Magnetlinien durch das magnetische Distanzstück 79 geführt werden, ist in der Figur 16 eine Abwandlung dargestellt, bei der diese beiden Distanzstücke nicht als Ring ausgebildet sind. Das aus magnetischem Material bestehende Leitstück 90 kann zwischen dem aus magnetisch leitendem Material bestehenden Deckel 72 und dem Segmenten 74, angeordnet sein. Dieses Leitstück 90 kann im Querschnitt gesehen zum Beispiel als Kreissegment einen Winkel von ca. 90 Grad aufweisen. Ist das Distanzstück nicht als Kreis ausgeführt, so ragt es zwischen die Deckenplatte 72 und den Segmenten 74, 75 hinein. Dadurch ist bei dieser Abwandlung des Winkelsensors der Drehbereich auf einen Drehwinkel kleiner als 360 Grad begrenzt. Die Trägerplatte 91 ist dann zum Beispiel als Halbkreis ausgebildet.

Wie bereits oben erwähnt, müssen die Deckenplatte und die beiden als Boden dienden Segmente nicht kreisförmig ausgebildet sein. In der Figur 17 ist eine quadratische Ausbildung dieser als Stator dienenden Teile des Winkelsensors dargestellt. Hier kann auch das Leitstück 90a außerhalb des vom Magneten überstrichenen Winkelbereichs 95 angeordnet sein. Bei dieser Abwandlung nach der Figur 17 sind wieder Drehwinkel größer als 360 Grad möglich.

Die scheibenförmige Ausgestaltung des Sensors zur Bestimmung von Drehwinkeln läßt sich auch zur Messung von Linearbewegungen umkonstruieren. Der Sensor 100 weist hierzu eine Bodenplatte 101 auf. Dieser Bodenplatte 101 gegenüber ist eine zweiteilige Deckenplatte zugeordnet, die aus einer ersten Deckenplatte 102 und einer zweiten Deckenplatte 103 besteht. Beide Deckenplatten 102, 103 weisen an ihren gegenüberliegenden Enden flanschartige Fortsätze 104 bzw. 105 auf. Zwischen diesen Fortsätzen 104, 105 ist in einem Spalt 106 ein Hallelement oder ein anderes oben erwähntes magnetfeldempfindliches Element 107 angeordnet. Die Fortsätze 104, 105 dienen dazu, um den Magnetfluß im Bereich des Hallelements 107 gleichmäßig zu verteilen und sind insbesondere bei größeren Hallelementen 107 notwendig. Bei kleineren Hallelementen können sie entfallen. Die beiden Deckenplatten 102, 103 und die Bodenplatte 101 bestehen aus magnetisch leitendem Material, insbesondere aus Weicheisen. Im Spalt 110 zwischen der Bodenplatte 101 und den beiden Deckenplatten 102, 103 wird ein scheibenförmig ausgebildeter Magnet 111 bewegt, an dem das nicht dargestellte Meßelement befestigt ist, dessen lineare Bewegung bestimmt werden soll.Die Polarisierung des Permanentmagneten 111 ist so ausgerichtet, daß sie in Richtung der Bodenplatte 101 oder auch entgegengesetzt gerichtet ist. Erfindungsgemäß ist nun die Deckenplatte 102 und die Bodenplatte 101 durch eine Platte 112 magnetisch leitend miteinander verbunden. Durch den dadurch bewirkten Fluß der Magnetlinien wird eine Verschiebung des linearen Bereichs der erzeugten Meßkurve erreicht, so daß innerhalb des linearen Bereichs der Meßkurve kein Vorzeichenwechsel entsteht. Bei der Ausführung nach der Figur 18 wird durch die Platte 112 der lineare Meßbereich begrenzt. Wird hingegen, wie in der Figur 19 ausgeführt, die den magnetischen Fluß leitende Platte 113 parallel zur Bewegungsrichtung des Permanentmagneten 111 angeordnet, so kann der Permanentmagnet 111 über die andere Öffnung des Sensors 100 hinausgeschoben werden oder die Deckenplatte 102a bzw. die Bodenplatte 101a kann verkürzt werden. Es ist möglich, sowohl.nur eine Platte 113 auf eine Seite oder auch diametral gegenüberliegend eine zweite Platte 113 anzuordnen.

## Patentansprüche

1. Messvorrichtung zur berührungslosen Erfassung eines Drehwinkels zwischen einem aus magnetisch leitendem Material bestehenden mehrteiligen Stator (10, 11, 13, 14) und einem Rotor (22), wobei sich zwischen Stator (10, 11, 13, 14) und Rotor (22) ein erster Luftspalt (21) befindet und im Stator (10, 11, 13, 14) mindestens ein zweiter Luftspalt (12) ausgebildet ist, wobei sich im mindestens einem zweiten Luftspalt (12) mindestens ein magnetfeldempfindliches Element (20) befindet und wobei im Rotor (22) mindestens ein Segment mindestens eines Ringmagneten angeordnet ist, wobei der Ringmagnet eine in radialer Richtung ausgerichtete magnetische Polarisierung besitzt, **dadurch gekennzeichnet, dass** wenigstens eines der Teile (11, 14) des Stators (10) eine magnetisch leitende Verbindung mit weiteren Teilen aufweist, und daß wenigstens ein anderes Teil (13) keine magnetisch leitende Verbindung (18) mit den übrigen Teilen (11, 14) aufweist, so dass eine Aufspaltung des Magnetflusses des Ringmagneten (22) erfolgt, wobei wenigstens ein erster Teil (F1) des Magnetflusses das magnetfeldempfindliche Element (20) durchströmt.

2. Messvorrichtung nach Anspruch 1, **dadurch gekennzeichnet, daß** der Stator aus zwei in ein Gehäuseteil (11) eingesetzte Segmente (13, 14) besteht, daß das erste Segment (14) magnetisch leitend mit dem Gehäuseteil (11) verbunden ist und das zweite Segment (19) magnetisch isoliert am Gehäuseteil angeordnet ist.

3. Messvorrichtung nach Anspruch 2, **dadurch gekennzeichnet, dass** das erste Segment (14) mit Hilfe seiner Platte (30) mit dem Gehäuseteil (11a) verbunden ist.

4. Messvorrichtung nach Anspruch 2, **dadurch gekennzeichnet, dass** das erste Segment (14) mit Hilfe eines Fortsatzes (56) mit dem Gehäuseteil (11) verbunden ist.

5. Messvorrichtung nach einem der Ansprüche 1 bis 4, **dadurch gekennzeichnet, dass** die Segmente (13, 14) symmetrisch ausgebildet sind.

6. Messvorrichtung nach einem der Ansprüche 1 bis 4, **dadurch gekennzeichnet, dass** die Segmente (13, 14) unsymmetrisch ausgebildet sind.

7. Messvorrichtung nach Anspruch 1, **dadurch gekennzeichnet, dass** der Stator aus einem Kern (45) und aus einem den Kern (45) umgreifende, mindestens einen Schlitz (46, 47) für das mindestens eine magnetfeldempfindliche Element (39a, 40a) aufweisende, mehrteilige Gehäuse (49, 50) besteht, und dass der Kern (45) eine magnetisch leitende Verbindung (46) mit einem Teil des Gehäuses aufweist.

8. Messvorrichtung nach einem der Ansprüche 1 bis 7, **dadurch gekennzeichnet, dass** der Rotor (22) und der Stator (10) scheibenförmig ausgebildet sind.

9. Messvorrichtung zur berührungslosen Erfassung einer Linearbewegung zwischen einem Stator (100) und einem die Bewegung übertragenden Teil (111), wobei zwischen Stator (100) und bewegtem Teil (111) mindestens ein Luftspalt (110) ausgebildet ist und sich im Stator (100) mindestens ein magnetfeldempfindliches Element (107) aufnehmender Luftspalt (106) befindet, und wobei sich am Teil (111) ein Magnet befindet, **dadurch gekennzeichnet, dass** der Magnet senkrecht zur Bewegungsrichtung polarisiert ist, dass der Stator (100) wenigstens teilweise aus magnetisch leitendem Material besteht und aus mehreren Teilen (112, 101, 102, 103) aufgebaut ist, wobei wenigstens eines der Teile (101, 102) des Stators (100) eine magnetisch leitende Verbindung mit weiteren Teilen aufweist, und wobei wenigstens ein anderes Teil (103) keine magnetisch leitende Verbindung mit den übrigen Teilen (102, 112, 101) aufweist, so dass eine Aufspaltung des Magnetflusses des Magneten (111) erfolgt, wobei wenigstens ein erster Teil des Magnetflusses das magnetfeldempfindliche Element (107) durchströmt.

## Claims

1. Measuring device for contactless determination of a rotary angle between a multi-part stator (10, 11, 13. 14) composed of magnetically permeable material and a rotor (22), a first air gap (21) being located between the stator (10, 11, 13, 14) and the rotor (22) and at least a second air gap (12) being formed in the stator (10, 11, 13, 14), at least one magnetic-field-sensitive element (20) being located in the at least one second air gap (12) and at least one segment of at least one ring magnet being arranged in the rotor (22), the ring magnet having a magnet polarization which is oriented in the radial direction, **characterized in that** at least one of the parts (11, 14) of the stator (10) has a magnetically permeable connection to further parts, and **in that** at least one other part (13) has no magnetically permeable connection (18) to the other parts (11, 14) so that the magnetic flux of the ring magnet (22) is divided, at least a first part (F1) of the magnetic flux flowing through the magnetic-field-sensitive element (20).

2. Measuring device according to Claim 1, **characterized in that** the stator is composed of two segments (13, 14) which are inserted into a housing part (11), **in that** the first segment (14) is connected to the housing part (11) in a magnetically permeable fashion, and the second segment (19) is arranged on the housing part in a magnetically insulated fashion.

3. Measuring device according to Claim 2, **characterized in that** the first segment (14) is connected to the housing part (11a) using its plate (13).

4. Measuring device according to Claim 2, **characterized in that** the first segment (14) is connected to the housing part (11) using a projection (56).

5. Measuring device according to one of Claims 1 to 4, **characterized in that** the segments (13, 14) are of symmetrical design.

6. Measuring device according to one of Claims 1 to 4, **characterized in that** the segments (13, 14) are of asymmetrical design.

7. Measuring device according to Claim 1, **characterized in that** the stator is composed of a core (45) and of a multi-part housing (49, 50) which engages around the core (45) and has at least one slot (46, 47) for the at least one magnetic-field-sensitive element (39a, 40a), and **in that** the core (45) has a magnetically permeable connection (46) to a part of the housing.

8. Measuring device according to one of Claims 1 to 7, **characterized in that** the rotor (22) and the stator (10) are of disc-shaped design.

9. Measuring device for the contactless determination of a linear movement between a stator (100) and a part (111) which transmits the movement, at least one air gap (110) being formed between the stator (100) and the moved part (111) and an air gap (106) which receives at least one magnetic-field-sensitive element (107) being located in the stator (100), and a magnet being located on the part (111), **characterized in that** the magnet is polarized perpendicularly with respect to the direction of movement, **in that** the stator (100) is composed at least partially of magnetically permeable material and is made up of a plurality of parts (112, 101, 102, 103), at least one of the parts (101, 102) of the stator (100) having a magnetically permeable connection to further parts, and at least one other part (103) having no magnetically permeable connection to the other parts (102, 112, 101) so that the magnetic flux of the magnet (111) is divided, at least a first part of the magnetic flux flowing through the magnetic-field-sensitive element (107).

## Revendications

1. Dispositif de mesure pour la détection sans contact d'un angle de rotation entre un stator en plusieurs pièces (10, 11, 13, 14) en matière conductrice magnétique et un rotor (22), avec un premier entrefer (21) réalisé entre le stator (10, 11, 13, 14) alors que le rotor (22), alors que le stator (10, 11, 13, 14) comporte au moins un second entrefer (12),
et avec au moins un élément magnétosensible (20) situé au moins dans le second entrefer (12), tandis que dans le rotor (22) il y a au moins un segment d'au moins un aimant annulaire,
ayant une polarisation magnétique dans la direction radiale,
**caractérisé en ce qu'**
au moins l'une des parties (11, 14) du stator (10) présente une liaison conductrice magnétique avec d'autres parties et au moins une autre partie (13) ne présente pas de liaison conductrice magnétique (18) avec les autres parties (11, 14) de façon à diviser le flux magnétique de l'aimant annulaire (22), dont au moins une première partie (F1) du flux magnétique traverse l'élément magnétosensible.

2. Dispositif de mesure selon la revendication 1,
**caractérisé en ce que**
le stator se compose de deux segments (13, 14) placés dans une partie de boîtier (11), le premier segment (14) étant relié de manière conductrice magnétique avec la partie de boîtier (11) et le second segment (13) est monté avec une isolation magnétique dans la partie de boîtier.

3. Dispositif de mesure selon la revendication 2,
**caractérisé en ce que**
le premier segment (14) est relié à la partie de boîtier (11a) à l'aide de sa plaque (30).

4. Dispositif de selon la revendication 2,
**caractérisé en ce que**
le premier segment (14) est relié à la partie de boîtier (11) par un prolongement (56).

5. Dispositif de mesure selon l'une des revendications 1 à 4,
**caractérisé en ce que**
les segments (13, 14) sont symétriques.

6. Dispositif de mesure selon l'une des revendications 1 à 4,
**caractérisé en ce que**
les segments (13, 14) sont asymétriques.

7. Dispositif de mesure selon la revendication 1,
**caractérisé en ce que**
le stator se compose d'un noyau (45) et d'un boîtier (49, 50) en plusieurs parties entourant le noyau (45), ayant au moins une fente (46, 47) pour au moins un élément magnétosensible (39a, 40a), et
le noyau (45) présente une liaison conductrice magnétique (46) avec une partie du boîtier.

8. Dispositif de mesure selon l'une des revendications 1 à 7,
**caractérisé en ce que**
le rotor (22) et le stator (10) sont réalisés en forme de disque.

9. Dispositif de mesure pour la détection sans contact d'un mouvement linéaire entre un stator (100) et une pièce (111) transmettant le mouvement, un entrefer (110) étant réalisé entre le stator (100) et la pièce mobile (111), le stator (100) comportant un entrefer (106) recevant un élément (107) sensible au champ magnétique, et la pièce (111) comportant un aimant,
**caractérisé en ce que**
l'aimant est polarisé perpendiculairement à la direction du mouvement, le stator (100) est au moins partiellement en matière conductrice magnétique et se compose de plusieurs parties (112, 101, 102, 103), au moins l'une des parties (101, 102) du stator (100) ayant une liaison conductrice magnétique avec d'autres parties, et
au moins une autre partie (103) ne présente pas de liaison magnétique avec les autres parties (102, 112, 101) pour diviser le flux magnétique de l'aimant (111), dont au moins une première partie du flux magnétique traverse l'élément sensible au champ magnétique (107).
